# EUROPEAN PATENT SPECIFICATION

(11) **EP 1 753 830 B1**
(45) Date of publication and mention of the grant of the patent: **21.05.2008**
(21) Application number: 05758977.2
(22) Date of filing: 29.04.2005
(51) Int. Cl.: C09D 7/00, C09D 7/12, C09D 167/08

(54) **COLOUR CHANGING COATING COMPOSITION**
CHANGIERENDER LACK
COMPOSITION DE REVETEMENT A CHANGEMENT DE COULEUR

(30) Priority: 27.05.2004 GB 0411842
(43) Date of publication of application: 21.02.2007
(73) Proprietor: Imperial Chemical Industries Plc., London W1U 3AN (GB)
(72) Inventor: HORLEY, Susan Mary, High Wycombe, Buckinghamshire (GB); TAYLOR, Philip Louis, Burnham, Buckinghamshire (GB)
(86) International application number: PCT/EP2005/004731
(87) International publication number: WO 2005/118725

(56) References cited:
- EP-A- 0 052 764
- EP-A- 0 234 641
- EP-A- 0 549 145
- AU-A- 4 904 672
- US-A- 4 387 190
- US-A- 4 855 384
- US-A- 5 302 627
- US-A- 5 548 010

## Description

The present invention relates to colour changing coating compositions, their preparation and use.

Coating compositions, such as protective and decorative paints and varnishes typically comprise a polymeric binder resin and other ingredients such as thickeners, pigments, fillers, additives and solvents. The binder resin binds together any dispersed material such as pigment and fillers and largely provides the essential properties of the coating such as protective and decorative qualities. The binder resin may be an autoxidisable resin by which is meant that it can produce free radicals by taking up atmospheric oxygen, causing it to crosslink and harden.

Coating compositions are commonly used to coat a variety of objects and structures including automobiles, bridges, articles and the interiors and exteriors of buildings. The application of these coatings to surfaces by non-automated equipment can cause problems. For example, operators or workmen using hand held applicators such as brushes, rollers or spray guns can find it difficult to apply the required thickness of paint in order to provide adequate protective properties. Alternatively, where the paint is to be applied to a previously applied coating which is of the same or similar colour, it may be difficult to know whether sufficient or indeed any paint has been applied. These problems are all exacerbated by poor lighting conditions, such as when shadows fall across the surface to be painted or when painting a ceiling.

Known methods to overcome this problem have focussed on the use of colour changing dyes. Such dyes change from coloured to colourless in response to changes in pH, thereby revealing the true colour of the coating. Known pH sensitive dyes include phenolphthalein, bromo-thymol blue, bromo-cresol purple, phenol red and chlorophenol red.

CH 464415 to Ebnother et al describes the use of such colour change indicators in adhesives and paint-like materials to enable the user to track where the adhesive has been applied. The amount of indicator and pH of the adhesive are selected such that the adhesive is coloured during application and as it dries, the pH drops and the indicator becomes colourless rendering the adhesive also colourless. Laid open patent JP 60-170674 to Ayogani et a1 applied the same principle to unpigmented waterborne paints for use in temporary peelable coatings. EP 0488980 to Jongerius et al used this same teaching in relation to pigmented waterborne emulsion paints, that is paints that dry by the loss of solvents or carrier liquid rather than through the additional mechanism of autoxidation.

All of these methods require the paint to have a high initial pH, usually achieved by including a basic material such as an amine in the paint. During drying the amine is lost and/or carbon dioxide is absorbed from the atmosphere causing the pH to fall and the indicator to substantially lose its colour.

The above compositions all suffer from a further problem in that the strength or amount of colour that can be added is quite low. This means that the techniques described above are only usable with white or nearly white colours. Attempts to provide a deeper initial temporary colour, for example by adding more dye generally result in unacceptable increases in the time taken for the colour to dissipate.

An alternative approach has been described in US 5,548,010 to Franer which discloses the addition of light unstable coloured dyes to waterborne paint. On exposure to light following application to a surface of an article or structure, the colour of the dye in the drying or dried paint dissipates, leaving visible only the true colour of the paint. However, the resulting mixture of paint and dye becomes unusable beyond about 5 to 10 hours at most following mixing and the paint must be discarded. In order to overcome this, Franer proposes that the paint and the dye are sold separately in two packs, which the user combines and mixes immediately prior to use. This is a major problem as both professional and amateur users prefer to avoid making additions, even small ones, to structured semi-gelled paints as achieving homogeneous distribution of, for example the dye, is very difficult without recourse to high speed mixing equipment. The period during which such paint compositions are usable is generally referred to as the pot life. A long pot life is preferred.

A further problem associated with this approach is that the rate of colour loss is inevitably dependent on local lighting conditions. Those parts of the painted structure which are poorly illuminated, for instance in shadow or a dark corner of a room, remain coloured for far longer than those which have more light incident on them. It also means that the colour dissipates only very slowly, if at all, in the absence of light for example overnight in a dark room or outside.

European patent application EP 0052764, discloses a method for the manufacture of transfer images and varnishes cured by high power UV lamps. Very high levels of photoinitiator are required in order to achieve such UV curing and there is no indication that any colour change is involved.

United States patent US 4855384 discloses isocyanate terminated sulfocompounds of low molecular weight which can be reacted with ethylenically unsaturated alcohols under actinic radiation to form a solvent insoluble polymer. Alkyd polymers are not disclosed and nor is any colour changing coating composition.

United States patent US 4387190 discloses high solids coating compositions optionally containing photoinitiator and dye. No colour changing composition is identified in this document.

It is an object of this invention to provide a colour change coating composition containing light unstable colour change material that is stable and is provided as a one pack without the need for the user to mix in ingredients prior to use.

It is a further object to provide a coating composition containing such colour change material that can change colour in the partial or complete absence of light.

Accordingly there is provided an architectural coating composition capable of changing colour from a first stage colour and a final stage lighter colour within a period of 24 hours, comprising, on a weight % basis calculated on the 100% coating composition,
a) 0.0001 to 0.0500 % of light unstable colour change material having a first stage colour and a final stage lighter colour
b) 0.001 to 0.100 % of photoinitiator capable of producing reactive species in response to illumination by light
c) alkyd resin.

The coating composition may be one pack or two pack.

By one pack is meant that the coating composition may be used straight from the container as supplied by the manufacturer rather than the user having to make additions prior to use. This especially relates to the addition of the colour change material. Preferably the coating composition remains usable up to one month following manufacture, more preferably up to 6 months even more preferably up to 12 months and most preferably up to 24 months.

By two pack is meant that the colour change material is added to the coating composition immediately prior to use. This allows users to add as much or as little as they want according to taste or according to the prevalent lighting conditions or, indeed the colour of the substrate to be overcoated.

Preferably the coating compositions are one pack as the avoids the need to add material to the paint

The colour change material can be any material, for example a dye or pigment, that has a first stage colour and which under the influence of light is capable of changing to a final stage colour that is different to the first colour, especially when in a coating composition. The light may be in the ultraviolet region of the spectrum (UV), generally considered to be of wavelengths from 200 to 400 nanometres or visible light, generally considered to be wavelengths from 400 to 750 nanometres. Visible light is preferred because the intensity of visible light inside structures, for example rooms in dwellings can be readily increased when necessary by using domestic light sources such as lamps, bulbs and fluorescent tubes. Increasing UV light intensity requires special lamps and users must take special precautions to protect their eyes.

Without wishing to be bound by this it is thought that the light unstable colour change material can also react with the alkyd resin or moieties resulting from the autoxidation of the resin to cause the first stage colour to change to the final stage colour. In addition, the reactive species produced by the photoinitiator are also capable of causing the colour change material to change colour. In this way it is believed that the coating composition can change colour within a few hours in a variety of illumination conditions, including darkness.

The first stage colour is different to the true colour of the composition. Additionally, the final stage colour is a lighter colour than the first stage colour. Preferably, the final stage colour is substantially colourless as this allows the true colour of the coating to be seen following the colour change.

Preferably, the change in colour of the colour change material, particularly when in a coating composition, should also be capable of being caused by free radicals. Even more preferably, the free radicals are derived from the alkyd resin and/or the photoinitiator. Free radicals are moieties having unpaired electrons.

Suitable examples of colour change materials include (Rose Bengal, Basic Violet 1 also known as Methyl Violet, Basic Violet 2 (also known as New Fuschin), Basic Violet 3 (also known as Crystal Violet), Basic Violet 4 (also known as Ethyl Violet), Basic Violet 10 (also known as Rhodamine B), Methylene Blue, Safranine O, Duramine Violet and Eosine OJ. Preferably, the colour changing material is selected from the group consisting of Rose Bengal, Basic Violet 1, Basic Violet 10 or Safranine O. Rose Bengal is most preferred.

The amount of colour change material is from 0.0001 to 0.05 weight % based on the 100% liquid coating composition, more preferably from 0.0005 to 0.025 and preferably from 0.001 to 0.007 weight %. The precise amount of colour change indicator may be selected by routine experimentation according to the true colour of the coating and the strength of the first and final stage colour.

The change in colour should occur in less than 24 hours, preferably less than 12 hours and more preferably less than 6 hours. Most preferred is that the colour change occurs in from 3 to 6 hours as this allows the user to see where the coating has been applied during painting whilst minimising the amount of time that the coated substrate retains the first stage colour.

The coating may be an unpigmented varnish or a pigmented paint. When, in particular, a pigmented paint is used it is advantageous that the first stage colour of the colour change material is sufficiently different to the true colour of the paint. This enables a painter to see where the paint has been applied to a same or similarly coloured substrate.

Photoinitiators are organic or organometallic compounds that on exposure to light undergo a photoreaction to produce reactive species. Preferably the photoinitiators are able to produce the reactive species under the influence of visible light and/or ultraviolet light. Visible light is more preferred as the light unstable colour change indicator is itself preferably unstable to visible light and thus the combination of the two further accelerates the loss of the first stage colour. Sources of light are readily available either in the form of light bulbs, fluorescent tubes or the sun. Preferably the reactive species produced by the photoinitiator are free radicals.

Suitable examples of organic photoinitiators that produce free radicals include ketones, such as methyl ethyl ketone, 2,3 butane dione, 1-hydroxy cyclohexyl phenyl ketone, 2-hydroxy-2-methyl-1-phenyl propan-1-one, acetophenone,benzophenone,4-aminobenzo-phenone, 4,4'-diaminobenzophenone, 4,4'-bis(dimethyl amino) benzophenone, valero phenone, hexanophenone, o-methoxybenzophenone, α-phenyl butyrophenone, γ-phenyl butyrophenone, p-morpholinopropiophenone, di-benzosuberone, 4-morpholinopropiophenone, 4-methoxyacetophenone, 4-diacetyl benzene, 1,3,5 triacetyl benzene; benzoin compounds such as benzoin, benzoin methyl ether and ethyl ether; quinone and anthrone compounds such as hydroquinone, anthraquinone, naphthoquinone, acenaphthenequinone and 3-methyl-1,3-diazo-1,9-benzanthrone; phenolic compounds such as 2,4-dinitrophenol; phosphine compounds such as triphenyl phosphine and tri-o-tolyphosphine; azo compounds such as azobisbutyronitrile; thioxanthone and 2-chlorothioxanthone.

Phosphine oxide photoinitiators are preferred. Suitable examples include 2,4,6-trimethyl benzoyldiphenyl phosphine oxide, bis (2,6-dimethoxybenzoyl)-2,4,4-trimethyl pentyl phosphine oxide. More preferred are the acyl phosphine oxide photoinitiators such as mono-, bis- and tris-acyl phosphine oxide and mixtures thereof. Even more preferred are the bisacyl phosphine oxide photoinitiators with bis(2,4,6-trimethylbenzoyl)-phenyl-phosphine oxide (available from Ciba Specialty Chemicals as Irgacure 819) being most preferred.

Suitable examples of organometallic photoinitiators include (5-cyclopentadienyl)-bis(2,6-difluoro-3-[pyrr-1-yl]-phenyl titanium, also known as Irgacure 784; and cyclopentadienyl (cumenyl) iron hexafluorophosphate, also known as Irgacure 261.

Preferably, the amount of photoinitiator should be from 0.001 to 0.1 weight % based on the 100% liquid coating composition, more preferably from 0.005 to 0.05 weight % and most preferably from 0.0075 to 0.035 weight %.

Free radicals can also be generated, for example by thermal decomposition of initiators such as peroxides, peresters and azobiscarbonitriles. However, this type of initiator is not preferred as it is difficult to formulate coating compositions containing initiators that produce free radicals by thermal decomposition at room temperature that are also stable at that temperature.

For certain applications, the coating may be applied to an article and the coated article exposed to elevated temperature to promote the autoxidation reaction. In such circumstances the decomposition temperature of the initiator may be high enough that little or no decomposition occurs at room temperature so that a stable composition may be produced.

Autoxidisable resins contain ethylenically unsaturated bonds. Such resins produce free radicals by the uptake of oxygen from the atmosphere. This is a process known as autoxidation. Without wishing to be bound by this, it is thought that the oxygen reacts with the ethylenic unsaturation of the autoxidisable portion of the resin, to produce hydroperoxides. The hydroperoxides are unstable and decompose producing free radicals which themselves go on to react with the remaining ethylenic unsaturation to produce crosslinks in the coating thereby causing the coating to harden, preferably to a solid material. In a preferred embodiment, the free radicals are also able to cause the colour change in a coating composition containing a colour change material.

The invention has the further advantage in that autoxidation relies on the uptake of oxygen from the atmosphere and thus whilst the coating composition is in a sealed container very little, if any, autoxidation occurs and a stable one pack coating composition can be formulated.

Autoxidisable resins include the alkyds and these may be waterborne or solvent borne. By waterborne is meant that the resin is dissolved or dispersed as small droplets to form an emulsion in an aqueous medium being predominantly water. By solvent borne is meant that the resin is dissolved in a solvent or solvent mixture to form a resin solution.

Alkyd resins are described on pages 211 to 217 of Volume 1 of the second edition of Outlines of Paint Technology by W M Morgans and published in 1988 in London by Griffith. Morgans explains that alkyd resins are the condensation product of polycarboxylic acids with polyhydric alcohols to which are attached moieties containing autoxidisable ethylenic unsaturation. Usually the acid is a dicarboxylic acid and the alcohol is a dihydric alcohol. The moieties containing autoxidisable ethylenic unsaturation are usually of long chain with a linear carbon length at least approximately 14. They are normally obtained from vegetable oils.

Examples of suitable dicarboxylic acids include ortho-phthalic, terephthalic, maleic, fumaric, adipic and sebecic acids or their anhydrides. Suitable polyhydric alcohols include ethylene glycol, glycerol, pentaerythritol, 1,2 propylene glycol, trimethylol propane and neopentyl glycol.

Suitable moities containing autoxidisable ethylenic unsaturation are the drying- and semi-drying oil fatty acids including linseed oil fatty acid (also known as LOFA), tung oil fatty acid, safflower oil fatty acid (SOFA), castor oil fatty acid, tall oil fatty acid (TOFA) and soya bean oil fatty acid (SBOFA). TOFA, SBOFA and SOFA are preferred as alkyd resins containing these have a lesser tendency to yellow than those formulated using drying oils such as LOFA and tung oil fatty acid. Most preferred are SBOFA and TOFA.

Where the autoxidisable resin is an alkyd it is preferred that the moieties containing the ethylenic unsaturation comprise from 25 to 85 weight % of the alkyd resin non-volatile content more preferably from 45 to 85 weight % and most preferably from 65 to 85 weight %. Alkyd resins containing 60 to 85 weight % of the moieties are generally referred to as 'long oil' alkyds whilst those containing from 45 to 60 weight % are called 'medium oil' alkyds and those with only 25 to 45 weight % are called 'short oil' alkyds. The medium and long oil alkyds are preferred as this not only causes the coating to harden to its solid state more rapidly but it also causes the final stage colour to appear quickly.

The alkyd resins can be further modified to provide thixotropic viscosity when formulated into a paint. This can be achieved by modification of the alkyd with a polyamide.

Preferably the amount of autoxidisable resin in the coating composition is from 10 to 80 weight % based on the solids content of the coating composition, more preferably from 25 to 70 weight % and most preferably from 40 to 60 weight %.

Preferably the autoxidisable resin is the main binder resin of the composition.

Most autoxidisable resins, including alkyd resins autoxidise too slowly at ambient temperatures to produce a dry and handleable coating within a reasonable time. Optionally, metal driers, also referred to as siccatives, may be used in combination with the coating compositions to speed-up the autoxidation. Such driers are advantageously used in architectural coatings that cannot be exposed to elevated temperatures to promote crosslinking.

The driers are broadly of two types; the 'surface' driers, that largely cause the surface of the coating to autoxidise and dry, and 'through' or 'auxilliary' driers that are more effective at causing the coating beneath the surface to autoxidise and harden. Preferably, a combination of the two types is used as this produces an even degree of crosslinking and hardness throughout the coating.

Suitable examples of 'surface' driers include carboxylates, preferably octoates, 2-ethyl hexanoates or naphthanoates of manganese, nickel, iron, chromium, vanadium, copper, tin, cobalt and cerium. Cobalt driers are preferred with cobalt naphthanoates being most preferred as these promote early surface dry.

Suitable examples of through driers include compounds of the above carboxylates with one or more carboxylates of zirconium, strontium, lithium, sodium, potassium, calcium, zinc, cerium, neodymium, aluminium and bismuth as well as alkoxides of aluminium. Calcium and zirconium through driers are preferred.

The surface driers are preferably used in amounts such that the metal concentration based on the weight of all the autoxidisable resin of the composition is from 0.02 to 0.1 weight %, more preferably from 0.03 to 0.07 weight % and most preferably from 0.03 to 0.06 weight %. At these levels the coating hardens faster and the final stage colour appears more quickly than otherwise they would. For the 'through' driers the preferred amount is from 0.03 to 0.6 weight %, whilst the more preferred amount is from 0.1 to 0.6 weight % and the most preferred is from 0.15 to 0.5 weight % calculated on the same basis as for the surface driers.

The coating composition may also include ingredients found in coatings. Suitable such ingredients include antifoams, biocides, pigments, fillers, thickeners, crosslinkers, flow aids and antiskinning agents.

Preferably the coating composition contains a carrier liquid and/or a solvent as this provides a liquid coating which users find easy to use.

There is also provided a process for making the coating composition of the invention comprising mixing alkyd resin, light unstable colour change material and photoinitiator

The invention also provides a method of forming a coated substrate comprising providing a substrate and applying onto at least a portion of the substrate at least one layer of coating composition of the invention allowing the layer to dry and optionally illuminating the substrate with visible light.

The invention further provides a coated substrate comprising a substrate, such as for example a wall, ceiling, floor or article, coated with a coating composition of the invention.

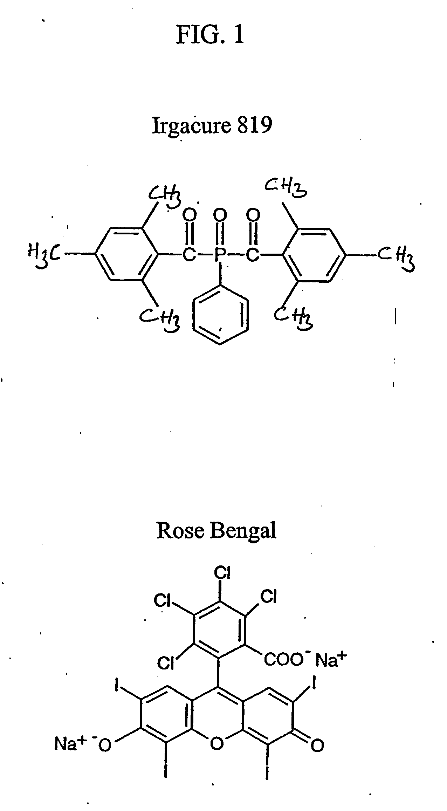

This description is accompanied by drawings of which
Figure 1 shows graphic representations of Irgacure 819 and Rose Bengal

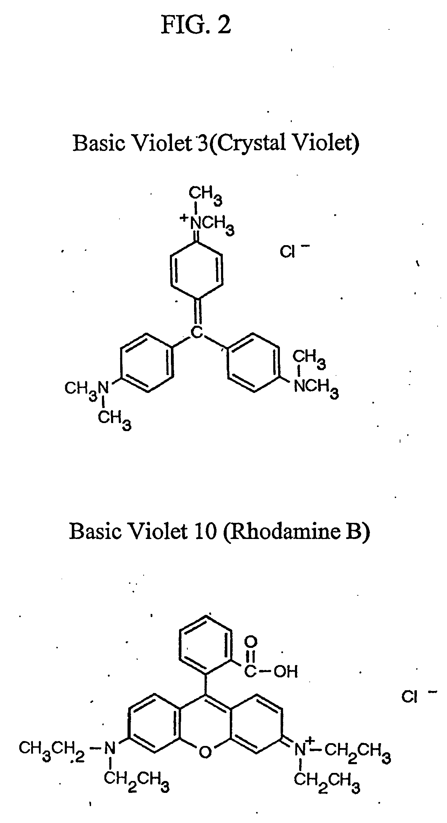

Figure 2 shows graphic representations of Basic Violet 3 and Basic Violet 10.

The invention is further illustrated by the following examples.

The ingredients referred to in the examples are listed below and are available from the suppliers indicated.

Rose Bengal is available from Sigma-Aldrich Chemicals, Gillingham, Dorset, SP8 4JL, UK.

Irgacure 819 is available from Ciba Specialty Chemicals PLC, Macclesfield, Cheshire, SK10 2NX, UK.

Dowanol PM is propylene glycol methyl ether and is available from Dow Chemical Company Ltd of Lakeside House, Stockley Park, Uxbridge, Middlesex, UB11 1BE, UK

Propylene Glycol is also available from the Dow Chemical Company Ltd.

Exxsol™ D40 is a dearomatised aliphatic hydrocarbon of boiling range from 164 to 192°C and is available from ExxonMobil Chemicals, Whiteley, Fareham, Hampshire, PO15 7AP, UK

Titanium Dioxide RTC90 available from Huntsman, Billingham. TS23 1PS, UK.

Bentone SD1 is a organic derivative of montmorillonite clay thickener available from Elementis Chemicals.

Nuosyn Zirconium 18% is a zirconium drier comprising 18 % by weight of zirconium metal and is available from Elementis Specialties.

Manosec Cobalt 10% HF is a cobalt based drier containing 10% by weight of cobalt metal and is available from Rhodia Ltd, Watford, Hertfordshire, WD24 4QP, UK.

Octa Soligen Calcium 10 is a calcium based drier containing 10% by weight of calcium metal and is available from Borchers.

### EXAMPLES

All parts are by weight.

### Resin A

To a reactor fitted with a stirrer, inert gas supply, Dean and Stark separator and condenser was added 401 parts of soyabean oil, 100 parts of 2 poise soyabean stand oil and 899 parts of pentaerythritol. Lithium hydroxide, an alcoholysis catalyst was added and the mixture heated to 250°C whilst stirring. The mixture was held at this temperature until alcoholysis was complete when the temperature was reduced to 120°C and 162.5 parts of phthalic anhydride was added. A small amount of xylene was added to the Dean and Stark separator and the temperature raised to 240°C, adding further xylene as required to maintain the reflux at this temperature. Water was removed as the esterification proceeded. Maintain the temperature at 240°C until the acid value is below 10 mg KOH/g of non-vol resin and the Gardner viscosity is W. Cool back and thin to 75% solids with white spirit to give Resin A.

### Resin B

Resin B is a polyamide modified soya bean oil alkyd of oil length 59% at 52 weight % solids.

### Example 1

A white paint was made by mixing in a high speed disperser for 30 to 40 minutes 12.9 parts of Resin A, 5.65 parts of Exxsol D40, 29.82 titanium dioxide RTC 90 and 0.5 parts of Bentone SD1. After dispersion was complete, the following further additions were made whilst mixing at low speed; 20.35 parts of Resin A and 20.08 parts of Resin B. When a homogeneous mixture was formed yet further additions were made consisting of 0.5 parts of Nuosyn Zirconium 18%, 0.21 parts of Manosec Cobalt 10% HF, 1.41 parts of Octa Soligen Calcium 10, 0.2 parts of methyl ethyl ketoxime, 0.5 parts of propylene glycol and 7.88 parts of Exxsol D40. The resulting mixture was stirred at low speed for a further 30 minutes.

The white paint has a solids content of 67% by weight and does not contain any colour change material or photoinitiator.

### Stock solutions

A stock solution of Rose Bengal was made by adding 6.5g of Rose Bengal to 93.5g of propylene glycol.

A stock solution of Irgacure 819 was made by adding 5.0g of Irgacure 819 to 95.0g of Dowanol PM.

### Example 2

To 1000g of the paint made according to Example 1 was added 0.308g of the Rose Bengal stock solution. The paint was stirred during the addition and continued until a homogeneous mixture was achieved as indicated by the even colour of the paint. The paint as made was pink, being the resultant colour of mixing the white paint with the red of Rose Bengal.

### Example 3

A pink paint was made according to Example 2 to which 2.0g of the Irgacure stock solution 819 was added. The paint was stirred during the addition and continued until a homogeneous mixture was achieved as indicated by the even colour of the paint.

### Example 4

A deeper pink paint was made by adding 0.616g of the Rose Bengal stock solution and 2.0g of the Irgacure 819 stock solution to 1000g of a white paint made according to Example 1. The paint was stirred during the additions and continued until a homogeneous mixture was achieved as indicated by the even colour of the paint.

### Example 5

A deep pink paint was made adding 0.616g of the Rose Bengal stock solution and 4.0g of the Irgacure 819 stock solution to 1000g of a white paint made according to Example 1. The paint was stirred during the additions and continued until a homogeneous mixture was achieved as indicated by the even colour of the paint.

### Panel Preparation

Each of the paints of Examples 1 to 5 was applied at room temperature to two flexible tinplate panels by brush to achieve a wet coating thickness of 100 microns. One panel was labelled L, signifying that it would be exposed to visible light prior to measurement of the colour characteristics, the other was labelled D to signify that it would be kept in the dark prior to measurement. The light source, where used, was of an intensity as would be found in a normal domestic environment being a combination of natural daylight from a nearby window and light from domestic fluorescent tubes.

The colour characteristics of the drying paints on the panels were monitored by measuring the L*, a* and b* values using an ACS/Datacolor Spectraflash 600 photometer. Of particular interest was the a* value as this is most sensitive to changes in the red region of the colour spectrum. The measurements were made immediately following application and at the intervals indicated in Table 1. The panels labelled L were continually exposed to the light source indicated, removed for measurement and then immediately returned to exposure following which the next measurement was made. The panels labelled D were kept in the dark except for the duration of the measurement.

The ACS/Datacolor Spectraflash 600 photometer was used operating under the following conditions:
Specular included
LAV (Large area view-30mm)
UV included (filter off)
Illuminant D65,10 degree Observer data

The Δa* values shown in Table 1 are the difference of the a* value of Example 1, which does not contain any Rose Bengal and is thus white, and the indicated example. A positive number indicates that the example is redder than Example 1 and a negative number that it is more green. When Δa* is less than about 0.70 units it is difficult for the unaided eye to discern any difference in colour between the standard white coating composition of Example 1 and the coating compositions of the invention.

Table 1 summarises the Δa* data for Examples 2 to 5.

**TABLE 1**

| **Panel** | **Paint of Example** | **Δa*** | | | | | | | | | |
|---|---|---|---|---|---|---|---|---|---|---|---|
| | | **0hr** | **0.5hr** | **1hr** | **1.5hr** | **2hr** | **3hr** | **4hr** | **5hr** | **6hr** | **24hr** |
| **2L** | 2 | 1.81 | 1.86 | 1.68 | 1.96 | 1.34 | 1.82 | 0.61 | 0.36 | 0.22 | -0.09 |
| **2D** | 2 | 1.81 | 1.92 | 1.87 | 2.09 | 2.20 | 1.94 | 1.62 | 1.60 | 1.43 | 0.78 |
| **3L** | 3 | 1.68 | 1.71 | 1.71 | 1.41 | 0.95 | 1.22 | 0.58 | 0.37 | 0.25 | -0.07 |
| **3D** | 3 | 1.68 | 1.74 | 1.73 | 1.83 | 1.84 | 1.69 | 1.58 | 1.50 | 1.38 | 0.70 |
| **4L** | 4 | 3.06 | 3.10 | 3.07 | 2.80 | 1.77 | 2.51 | 1.11 | 0.82 | 0.46 | 0.07 |
| **4D** | 4 | 3.06 | 3.29 | 3.32 | 3.59 | 3.74 | 3.45 | 3.12 | 3.01 | 2.78 | 1.77 |
| **5L** | 5 | 2.67 | 2.79 | 2.48 | 2.32 | 1.72 | 2.21 | 0.77 | 0.86 | 0.33 | 0.23 |
| **5D** | 5 | 2.67 | 3.05 | 3.06 | 3.28 | 3.28 | 3.11 | 2.82 | 2.70 | 2.43 | 1.45 |

| | | | | | | | | | | | |
|---|---|---|---|---|---|---|---|---|---|---|---|
| L signifies panel exposed to visible light. D signifies panel not exposed to visible light | | | | | | | | | | | |

It can be seen that even the panels kept in the dark (2D to 5D) lose the red colour albeit not as rapidly as the panels exposed to visible light (2L to 5L). Comparing 2L and 3L demonstrates that the presence of the photoinitiator, Irgacure 819, speeds up the rate of loss of the red colour, especially over the first three hours. Increasing the amount of Rose Bengal increases the red colour of the paint, as shown by the higher value of Δa* at 0 hours of 4 and 5. Nevertheless, this colour is lost in about 6 hours when exposed to visible light.

## Claims

1. An architectural coating composition capable of changing colour from a first stage colour and a final stage lighter colour within a period of 24 hours, comprising, on a weight % basis calculated on the 100% coating composition,
a) 0.0001 to 0.05 % of light unstable colour change material having a first stage colour and a final stage lighter colour
b) 0.001 to 0.100 % of photoinitiator capable of producing reactive species in response to illumination by light
c) alkyd resin.

2. A coating composition according to Claim 1 **characterised in that** the composition is one pack.

3. A coating composition according to Claim 1 or 2 **characterised in that** the reactive species are free radicals.

4. A coating composition according to any one of the preceding Claims **characterised in that** the colour change material can be caused to change colour by free radicals.

5. A coating composition according to any one of the preceding Claims **characterised in that** it further comprises a drier.

6. A coating composition according to any one of the preceding Claims **characterised in that** the photoinitiator produces reactive species in response to illumination with visible light.

7. A coating composition according to any one of the preceding Claims **characterised in that** the photoinitiator is bis(2,4,6 tri-methyl benzoyl) phenyl phosphine oxide.

8. A coating composition according to any one of the preceding claims **characterised in that** the final stage colour is substantially colourless.

9. A coating composition according to any one of the preceding Claims **characterised in that** the colour change material is selected from the group consisting of Rose Bengal, Basic Violet 1, Basic Violet 10 and Safranine O.

10. A coating composition according to any one of Claims 3 to 9 **characterised in that** the free radicals are derived from the alkyd resin and/or the photoinitiator.

11. A coating composition according to any one of the preceding claims **characterised in that** it also contains ingredients selected from the group consisting of antifoams, biocides, pigments, fillers, thickeners, crosslinkers, flow aids and antiskinning agents.

12. A process for making the coating composition as claimed in any one of the preceding claims comprising mixing alkyd resin with light unstable colour change material and photoinitiator.

13. A process for forming a coated substrate comprising providing a substrate and applying onto at least a portion of the substrate at least one layer of coating composition as claimed in any one of Claims 1 to 11 and allowing the layer to dry whilst optionally illuminating the substrate with visible light.

## Patentansprüche

1. Bauten-Anstrichzusammensetzung, die in der Lage ist, die Farbe innerhalb eines Zeitraums von 24 Stunden von einer Farbe der ersten Stufe in eine hellere Farbe einer Endstufe zu verändern, die, auf Gewichtsprozentbasis, berechnet auf 100% der Anstrichzusammensetzung, umfasst:
a) 0,0001 bis 0,05% eines Licht-instabilen Farbveränderungsmaterials mit einer Farbe der ersten Stufe und einer helleren Farbe der Endstufe,
b) 0,001 bis 0,100% eines Photoinitiators, der in der Lage ist, als Reaktion auf eine Bestrahlung mit Licht reaktive Spezies zu erzeugen,
c) Alkydharz.

2. Anstrichzusammensetzung nach Anspruch 1, **dadurch gekennzeichnet, dass** die Zusammensetzung eine Einzelpackung ist.

3. Anstrichzusammensetzung nach Anspruch 1 oder 2, **dadurch gekennzeichnet, dass** die reaktiven Spezies freie Radikale sind.

4. Anstrichzusammensetzung nach irgendeinem der vorausgehenden Ansprüche, **dadurch gekennzeichnet, dass** das Farbveränderungsmaterial durch freie Radikale veranlasst werden kann, die Farbe zu ändern.

5. Anstrichzusammensetzung nach irgendeinem der vorausgehenden Ansprüche, **dadurch gekennzeichnet, dass** sie außerdem einen Trockner umfasst.

6. Anstrichzusammensetzung nach irgendeinem der vorausgehenden Ansprüche, **dadurch gekennzeichnet, dass** der Photoinitiator als Reaktion auf eine Bestrahlung mit sichtbarem Licht reaktive Spezies erzeugt.

7. Anstrichzusammensetzung nach irgendeinem der vorausgehenden Ansprüche, **dadurch gekennzeichnet, dass** der Photoinitiator Bis(2,4,6-Trimethylbenzoyl)-phenyl-phosphinoxid ist.

8. Anstrichzusammensetzung nach irgendeinem der vorausgehenden Ansprüche, **dadurch gekennzeichnet, dass** die Farbe der Endstufe im Wesentlichen farblos ist.

9. Anstrichzusammensetzung nach irgendeinem der vorausgehenden Ansprüche, **dadurch gekennzeichnet, dass** das Farbveränderungsmaterial aus der Gruppe ausgewählt ist, die besteht aus Rose Bengal, Basic Violet 1, Basic Violet 10 und Safranine O.

10. Anstrichzusammensetzung nach irgendeinem der Ansprüche 3 bis 9, **dadurch gekennzeichnet, dass** sich die freien Radikale ableiten von dem Alkydharz und/oder dem Photoinitiator.

11. Anstrichzusammensetzung nach irgendeinem der vorausgehenden Ansprüche, **dadurch gekennzeichnet, dass** sie auch Bestandteile enthält, die aus der Gruppe ausgewählt sind, die besteht aus Antischaummitteln, Bioziden, Pigmenten, Füllstoffen, Verdickungsmitteln, Vernetzungsmitteln, Fließhilfsmittel und Hautverhütungsmitteln.

12. Verfahren zur Herstellung einer Anstrichzusammensetzung, wie sie in irgendeinem der vorausgehenden Ansprüche beansprucht wird, das das Vermischen eines Alkydharzes mit einem Licht-instabilen Farbveränderungsmaterial und einem Photoinitiator umfasst.

13. Verfahren zur Bildung eines beschichteten Substrats, das die Bereitstellung eines Substrats sowie das Auftragen auf wenigstens einen Teil des Substrats wenigstens einer Schicht einer Anstrichzusammensetzung, wie sie in irgendeinem der Ansprüche 1 bis 11 beansprucht wird, und das Trocknenlassen der Schicht umfasst, wobei man das Substrat gegebenenfalls mit sichtbarem Licht bestrahlt.

## Revendications

1. Composition de revêtement architectural capable de changer de couleur en passant d'une couleur d'un premier stade à une couleur plus claire de stade final en une période de temps de 24 heures, comprenant, en pourcentage en poids de la manière calculée sur la base de 100 % de la composition de revêtement,
a) 0,0001 à 0,05 % d'une matière à changement de couleur, instable à la lumière, ayant une couleur de premier stade et une couleur plus claire de stade final,
b) 0,001 à 0,100 % d'un photo-initiateur capable de produire une entité réactive en réponse à l'éclairement par de la lumière,
c) une résine alkyde.

2. Composition de revêtement suivant la revendication 1, **caractérisée en ce que** la composition est une composition en une partie.

3. Composition de revêtement suivant la revendication 1 ou 2, **caractérisée en ce que** l'entité réactive consiste en radicaux libres.

4. Composition de revêtement suivant l'une quelconque des revendications précédentes, **caractérisée en ce que** la matière à changement de couleur peut être amenée à changer de couleur sous l'action de radicaux libres.

5. Composition de revêtement suivant l'une quelconque des revendications précédentes, **caractérisée en ce qu'**elle comprend en outre un siccatif.

6. Composition de revêtement suivant l'une quelconque des revendications précédentes, **caractérisée en ce que** le photo-initiateur produit une entité réactive en réponse à l'éclairement par de la lumière visible.

7. Composition de revêtement suivant l'une quelconque des revendications précédentes, **caractérisée en ce que** le photo-initiateur est l'oxyde de bis(2,4,6-triméthylbenzoyl)-phénylphosphine.

8. Composition de revêtement suivant l'une quelconque des revendications précédentes, **caractérisée en ce que** la couleur du stade final est substantiellement incolore.

9. Composition de revêtement suivant l'une quelconque des revendications précédentes, **caractérisée en ce que** la matière à changement de couleur est choisie dans le groupe consistant en le rose Bengale, le violet Basic Violet 1, le violet Basic Violet 10 et la safranine O.

10. Composition de revêtement suivant l'une quelconque des revendications 3 à 9, **caractérisée en ce que** les radicaux libres sont dérivés de la résine alkyde et/ou du photo-initiateur.

11. Composition de revêtement suivant l'une quelconque des revendications précédentes, **caractérisée en ce qu'**elle contient également des ingrédients choisis dans le groupe consistant en des agents antimousse, des biocides, des pigments, des charges, des épaississants, des agents de réticulation, des auxiliaires d'écoulement et des agents antipeau.

12. Procédé pour la préparation de la composition de revêtement suivant l'une quelconque des revendications précédentes, comprenant le mélange de la résine alkyde à la matière à changement de couleur, instable à la lumière, et au photo-initiateur.

13. Procédé pour former un substrat revêtu, comprenant les étapes consistant à fournir un substrat et à appliquer sur au moins une partie du substrat au moins une couche de composition de revêtement suivant l'une quelconque des revendications 1 à 11 et à laisser la couche sécher tout en éclairant éventuellement le substrat avec de la lumière visible.
